(19) Europäisches Patentamt
European Patent Office
Office européen des brevets

(11)  EP 3 020 959 B1

(12)  **EUROPEAN PATENT SPECIFICATION**

(45) Date of publication and mention
of the grant of the patent:
**02.01.2019  Bulletin 2019/01**

(51) Int Cl.:
***F03D 7/02*** (2006.01)

(21) Application number: **14382447.2**

(22) Date of filing: **11.11.2014**

(54) **Methods of operating a wind turbine and wind turbines**

Verfahren zum Betreiben einer Windturbine und Windturbinen

Procédé de fonctionnement d'une éolienne et éoliennes

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**18.05.2016  Bulletin 2016/20**

(73) Proprietor: **GE Renewable Technologies Wind B.V.**
**4817 PA Breda (NL)**

(72) Inventors:
• **BETRAN PALOMAS, Jaume**
**08172 SANT CUGAT DEL VALLÈS (ES)**
• **NUALART, Pau**
**08401 GRANOLLERS (ES)**

(74) Representative: **ZBM Patents - Zea, Barlocci & Markvardsen**
**Plaza Catalunya, 1**
**08002 Barcelona (ES)**

(56) References cited:
**EP-A1- 2 757 252      EP-A1- 2 799 711**
**EP-A2- 2 778 400      US-A1- 2013 134 711**

## Description

The present disclosure relates to methods of operating a wind turbine and wind turbines suitable for such methods.

BACKGROUND

Modern wind turbines are commonly used to supply electricity into the electrical grid. Wind turbines of this kind generally comprise a rotor with a rotor hub and a plurality of blades. The rotor is set into rotation under the influence of the wind on the blades. The rotation of the rotor shaft drives the generator rotor either directly ("directly driven") or through the use of a gearbox.

A clear trend in the field of wind energy is to increase the size of the wind turbines. Both hub height and blade length have increased dramatically in recent years, and it appears that this trend will continue. With an increase in blade length, blades that are relatively lighter are needed in order to control the Cost of Energy (COE) of the wind turbine.

As blades become lighter, blade loads such as e.g. the blade root bending moment may become more critical. The blade loads may be substantially affected by e.g. wind gusts, turbulence and wind shear. Variable wind velocities, and more particularly, quickly changing wind velocities can especially affect the blade loads, and thereby impact the fatigue of various wind turbine components, such as e.g. the blades, hub, rotor shaft or gearbox.

Pitch systems may be employed in wind turbines for adapting the position of a wind turbine blade to varying wind conditions by rotating the blade along its longitudinal axis. In this respect, it is known to rotate a wind turbine blade in such a way that it generates less lift (and drag) when the wind speed increases. This way, even though the wind speed increases, the torque transmitted by the rotor to the generator remains substantially the same. It is furthermore also known to rotate wind turbine blades towards their stall position (so as to reduce the lift on the blades) when the wind speed increases.

Furthermore, aerodynamic devices such as e.g. flaps, slats, spoilers, and Boundary Layer Control devices may be employed on blades of wind turbines in order to influence and control the aerodynamic flow around the blades. Flaps along the trailing edge of a blade can be actuated relatively quickly and have the capability of quickly modifying the lift and drag (loads) of a blade. Flaps may therefore be employed on larger wind turbine blades to quickly alleviate loads when needed.

A variable speed wind turbine may typically be controlled by varying the generator torque and the pitch angle of the blades. As a result, aerodynamic torque, rotor speed and electrical power will vary.

A common prior art control strategy of a variable speed wind turbine is described for instance in EP 2 799 711 A1 and with reference to figure 1. In figure 1, the operation of a typical variable speed wind turbine is illustrated in terms of the pitch angle (β), the electrical power generated (P), the generator torque (M) and the rotational velocity of the rotor (ω), as a function of the wind speed.

A steady state operation of a wind turbine may thus generally be described as following a power curve, which describes the operation as a function of the prevailing wind speed. This does not necessarily mean that the wind speed is measured directly. Usually, the wind speed is determined in an indirect manner by determining the speed of rotation of the rotor, e.g. by measuring the speed of rotation of the generator. Based on the rotational speed (which represents the wind speed) of the rotor, a control may be implemented by adapting the generator torque and/or the pitch angle of the blades.

In a first operational range, from the cut-in wind speed to a first wind speed (e.g. approximately 5 or 6 m/s), the rotor may be controlled to rotate at a substantially constant speed that is just high enough to be able to accurately control it. The cut-in wind speed may be e.g. approximately 3 m/s.

In a second operational range, from the first wind speed (e.g. approximately 5 or 6 m/s) to a second wind speed (e.g. approximately 8.5 m/s), the objective is generally to maximize power output while maintaining the pitch angle of the blades constant so as to capture maximum energy. In order to achieve this objective, the generator torque may be varied so as to control the rotor speed in order to keep the tip speed ratio λ (tangential velocity of the tip of the rotor blades divided by the prevailing wind speed) constant so as to maximize the power coefficient $C_p$.

In order to maximize power output and keep $C_p$ constant at its maximum value, the rotor torque may be set in accordance with the following equation: $T = k.\omega^2$, wherein k is a constant, and ω is the rotational speed of the generator. In a direct drive wind turbine, the generator speed substantially equals the rotor speed. In a wind turbine comprising a gearbox, normally, a substantially constant ratio exists between the rotor speed and the generator speed.

In this region, the power coefficient is thus optimized by maintaining the tip speed ratio at a constant optimum value. The aerodynamics of the blade may generally be based in the performance in this operational range. Theoretically, the wind turbine will frequently operate in this operational range and it thus makes sense to optimize the turbine's performance in this range. However, this implies that the aerodynamic design of the blades is not optimized for other operational ranges.

In a third operational range, which starts at reaching nominal rotor rotational speed and extends until reaching nominal power, the rotor speed may be kept constant, and the generator torque may be varied to such effect. In terms of wind speeds, this third operational range extends substantially from the second wind speed to the nominal wind speed e.g. from approximately 8.5 m/s to approximately 11 m/s.

In a fourth operational range, which may extend from the nominal wind speed to the cut-out wind speed (for example from approximately 11 m/s to 25 m/s), the blades may be rotated ("pitched") to maintain the aerodynamic torque delivered by the rotor substantially constant. In practice, the pitch may be actuated such as to maintain the rotor speed substantially constant. At the cut-out wind speed, the wind turbine's operation is interrupted.

In the first, second and third operational ranges, i.e. at wind speeds below the nominal wind speed (the sub-nominal zone of operation), the blades are normally kept in a constant pitch position, namely the "below rated pitch position". Said default pitch position may generally be close to a 0° pitch angle. The exact pitch angle in "below rated" conditions however depends on the complete design of the wind turbine.

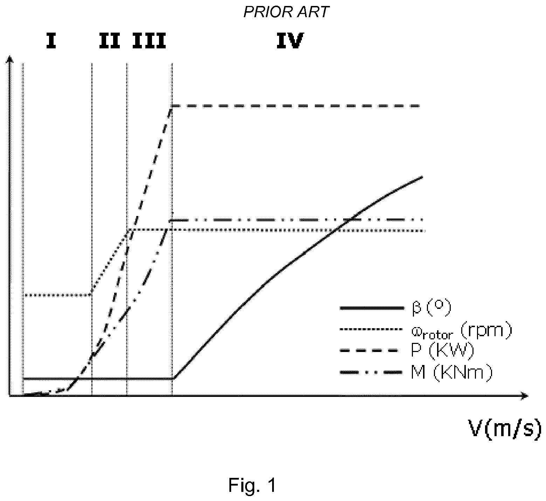

The before described operation may be translated into a so-called power curve, such as the one shown in figure 1. Such a power curve may reflect the optimum operation of the wind turbine under steady-state conditions.

The power coefficient $C_p$ (and thus the energy produced by the wind turbine) is however generally not optimized in the first and third operational ranges below nominal wind speed.

The present disclosure provides methods and systems suitable for improving the performance of wind turbines, particularly in the sub-nominal zone of operation.

SUMMARY

In a first aspect, a method of operating a wind turbine in steady state conditions as a function of a wind speed may be provided. The wind turbine has a rotor with a plurality of blades, and one or more pitch mechanisms for rotating the blades around their rotational axes, a generator, and a system for varying a torque of the generator, and wherein each of the blades comprises one or more local aerodynamic actuators. The method comprises a sub-nominal zone of operation for wind speeds below a nominal wind speed and a supra-nominal zone of operation for wind speeds at or above the nominal wind speed. The sub-nominal zone of operation comprises a first operational range which extends from a cut-in wind speed to a first wind speed, a second operational range extending from the first wind speed to a second wind speed, and a third operational range extending from the second wind speed to the nominal wind speed. In the second operational range, the system for varying the torque of the generator is controlled to maintain a tip speed ratio of the rotor constant and the local aerodynamic actuators are not activated. The method further comprises actuating the local aerodynamic actuators in the third operational range used to increase the lift of the blade, and/or actuating the local aerodynamic actuators in the first operational range, to decrease the lift of the blade.

In accordance with this aspect, the local aerodynamic actuators of the blade may be operated, thus the lift of the blade in the third operational range (which extends from the second wind speed to the nominal wind speed) may be increased and/or the lift of the blade in the first operational range (which extends from a cut-in wind speed to a first wind speed) may be decreased.

This way, the $C_p$ - $\lambda$ curve may be modified, thus higher power coefficient $C_p$ values may be obtained when the operation is not under optimum $\lambda$ conditions (for the blade without local aerodynamic actuators, or for the blade with aerodynamic actuators in their neutral position). Consequently, the energy produced by the wind turbine in the first operational range and/or in the third operational range may be increased. Depending on the type of local aerodynamic actuator and their control system, they may be actuated in the third operational range only, or in the first operational range only, or in both ranges.

In accordance with this aspect, the operation of the wind turbine may thus be represented by a modified steady state power curve describing the operation of the wind turbine as a function of the wind speed. As mentioned before, this does not necessarily mean that the wind speed is measured directly.

In a second aspect, a wind turbine is provided. The wind turbine comprises a rotor with a plurality of blades, a generator, a system for varying a torque of the generator, one or more pitch mechanism for rotating the blades around their longitudinal axes, one or more local aerodynamic actuators a wind turbine controller adapted to carry out the method substantially as hereinbefore described.

BRIEF DESCRIPTION OF THE DRAWINGS

Non-limiting examples of the present disclosure will be described in the following, with reference to the appended drawings, in which:

Figure 1 illustrates a typical power curve of a wind turbine;

Figure 2 illustrates a top view of a wind turbine blade;

Figures 3a - 3d illustrate the effect of a flap on the lift coefficient of an aerodynamic profile for different angles of attack and different flap positions;

Figure 4 illustrate different $C_p$ - $\lambda$ curves for a positive, negative and neutral actuation of the flaps according to an example;

Figures 5a - 5b illustrate various methods of operation in accordance with the present invention.

## DETAILED DESCRIPTION OF EXAMPLES

The power curve of the figure 1 has hereinbefore already been discussed.

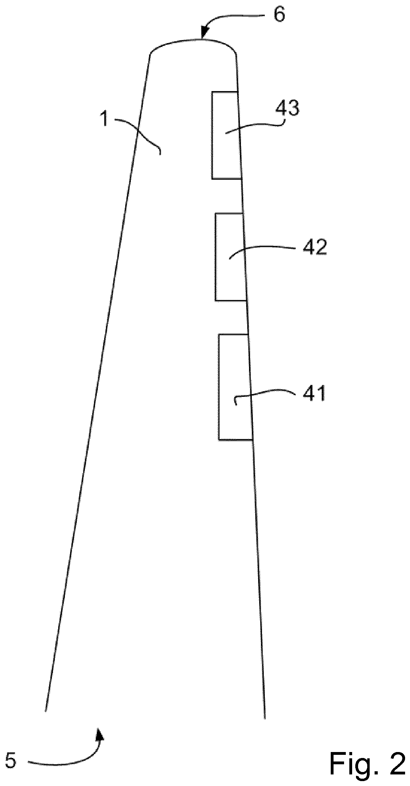

Figure 2 illustrates a top view of a wind turbine blade 1. The wind turbine blade extends from the blade root 5 to a blade tip 6. In the displayed embodiment, three flaps 41, 42, 43 have been provided along the trailing edge, substantially in an outer portion of the blade span. In other embodiments, more or less flaps may be provided. Additionally, in other embodiments, flaps may only be provided along an inner portion of the blade span, or alternatively flaps may be provided substantially along the entire blade span.

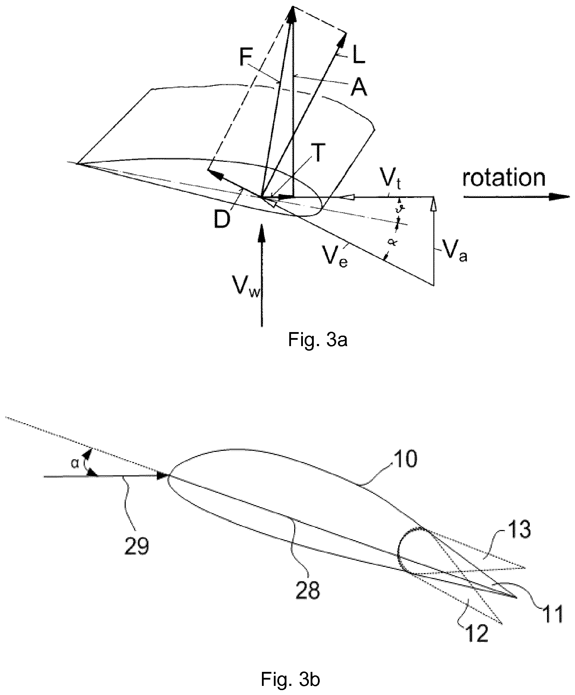

Figures 3a - 3c illustrate the effect of a flap on the lift coefficient of an aerodynamic profile for different angles of attack and different flap positions. In figure 3a, a profile of a wind turbine blade is depicted in operation. The forces generated by the aerodynamic profile are determined by the wind that the profile "experiences", the effective wind speed $V_e$. The effective wind speed is composed of the axial free stream wind speed $V_a$ and the tangential speed of the profile $V_t$. The tangential speed of the profile $V_t$ is determined by the instantaneous rotor speed $\omega$ and the distance to the centre of rotation of the profile, the local radius r, i.e. $V_t = \omega.r$.

The axial free stream wind speed $V_a$ is directly dependent on the wind speed $V_w$, and on the speed of the wind downstream from the rotor $V_{down}$, that is $V_a = \frac{1}{2}(V_w + V_{down})$. The axial free stream wind speed may e.g. be equal to approximately two thirds of the wind speed $V_w$.

The total wind velocity experienced by a blade portion may be expressed as

$$V_e = \sqrt{V_t^2 + V_a^2}\;.$$

The resultant wind flow, or effective wind speed $V_e$, generates lift L and drag D on the blade. A blade may theoretically be divided in an infinite number of blade sections, each blade section having its own local radius and its own local aerodynamic profile. For any given rotor speed, the tangential speed of each blade section will depend on its distance to the rotational axis of the hub (herein referred to as local radius).

The lift generated by a blade (section) depends on the effective wind speed $V_e$, and on the angle of attack of the blade (section) a, in accordance with the following formula:

$$L = \frac{1}{2}\rho.C_L V_e^2.S\;,$$

wherein
$\rho$ is the air density, $V_e$ is the effective wind speed, $C_L$ is the lift coefficient (wheren the lift coefficient is dependent on the angle of attack $\alpha$) and S is the surface of the blade section.

Similarly, the drag D generated by a blade section can be determined in accordance with the following equation: $D = \frac{1}{2}\rho.C_D V_e^2.S$ , wherein $C_D$ is the drag coefficient dependent on angle of attack $\alpha$.

For an entire wind turbine blade, the contribution to lift and drag of each blade section may be summed to arrive at the total drag and lift generated by the blade.

Both the drag coefficient $C_D$ and the lift coefficient $C_L$ depend on the profile or the blade section and vary as a function of the angle of attack of the blade section. The angle of attack $\alpha$ may be defined as the angle between the chord line of a profile (or blade section) and the vector of the effective wind flow, see also figure 3a.

It may be seen in figure 3a that the angle of attack is also influenced by the pitch angle $\vartheta$. An increase of the pitch angle will reduce the angle of attack of a blade.

A further influence on the angle of attack not depicted in figure 3a is the twist angle of the section of the blade. In conclusion, the angle of attack of a portion of the blade may thus be affected by the prevailing wind speed, the rotational speed of the rotor, its position along the blade span, the design twist of the airfoil and the pitch angle of the blade.

The angle of attack (if the pitch angle and the local twist angle are assumed to be zero) may be determined in accordance with:

$$\tan \alpha = V_a / V_t$$

Figure 3b illustrates a profile 10 comprising a flap in three different positions: a neutral position 11, a positive position 12 (in which the flap has a positive contribution to the lift) and a negative position 13 (in which the flap has a negative contribution to the lift).

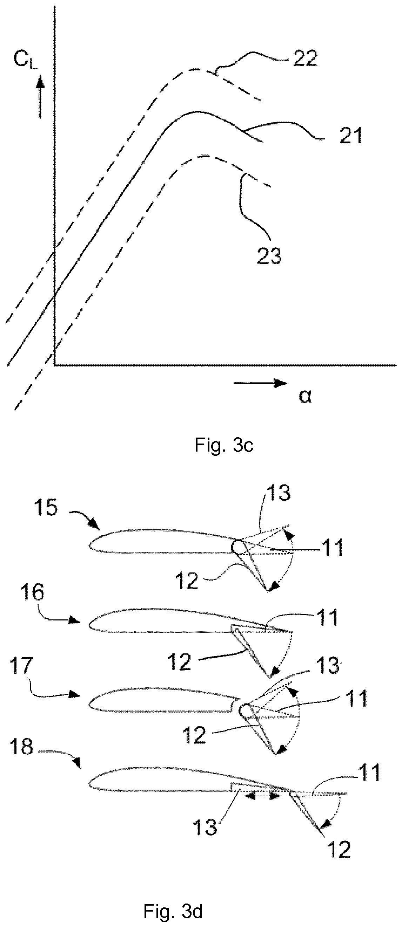

Figure 3c illustrates a typical curve 21 of the lift coefficient of a profile vs. angle of attack. The angle of attack $\alpha$ has been illustrated in figures 3a and 3b and may be defined as the angle between a reference line on a lifting body (in this case, the chord line of an airfoil 28) and the vector 29 representing the relative motion between the blade and the air through which it is moving.

The typical curve 21 shows that with increasing angle of attack, the lift coefficient of the profile increases, until "stall". If the angle of attack is increased further, the lift coefficient is reduced.

If a flap is put in its positive position, the lift of the airfoil is increased. A curve 22 that is substantially parallel to curve 21 may be the result: for any angle of attack, the lift coefficient is slightly higher. Similarly, a curve 23 that is substantially parallel to curve 21 corresponds to the same profile, but with the flap in a negative position. It will be clear that in practice, the curves of the lift coefficient may be different for any profile employed on a blade.

The effect of the positive flap position is generally that the drag increases and the effect of a negative flap position is generally that the drag decreases.

It will be clear that the lift curves ($C_L$ vs $\alpha$) may vary if a different airfoil is used. Furthermore, it should be noted that three-dimensional aspects may affect the lift and drag curves of a blade as well. These three-dimensional aspects are herein ignored, since the general teaching (flap towards a positive position increases the lift, and flap towards a negative position decreases the lift, representing a jump to a different lift curve) will approximately hold true for a blade as well.

Figure 3d illustrates some of the different flaps that may be used in embodiments of the present invention. Profile 15 comprises a "plain flap" illustrated in its neutral position 11, its positive position 12, and its negative position 13. Profile 16 illustrates a "split flap" in its neutral position, and its positive position. Such a split flap does not have a negative position.

Profile 17 comprises a "slotted flap" in its neutral position 11, positive position 12 and negative position 13. With a slotted flap, the air may flow partially through the slot in between the flap and the remainder of the profile. Finally, profile 18 comprises a "Fowler flap" in its neutral position, its positive position 12 and its negative position 13. A peculiar property of the "Fowler flap" is that the chord of the profile in its neutral position is longer than in its negative position.

Other movable trailing edge surfaces than the ones illustrated may be used in embodiments of the present invention. For example, also a Continuously Deformable Trailing Edge (CDTE) may also be used. In some embodiments, a blade may comprise one or more portions that are continuously deformable along its span.

Depending on which kind of flap or movable surface is used, the influence on the curves of the lift coefficient and drag coefficient may vary. In general, actuating the flap towards its positive position increases the curvature of an airfoil, which increases the lift. It further increases the drag, but to a lesser extent. As such, the loads on a blade increase, but this may be acceptable, in accordance with circumstances. The increase of the lift increases the aerodynamic torque of the rotor.

Actuating a flap towards its negative position decreases the lift and may increase the drag, but generally not to the same extent. The extent to which the drag increases (and it may actually decrease) also depends on the angle of attack. The decrease in lift reduces the aerodynamic torque and the loads on the blade in general. Moving the flap to its negative position may thus be used to counteract e.g. temporary high loads on a blade.

Furthermore, in some examples the flaps may be arranged in an outer third of the blades and may be controlled individually.

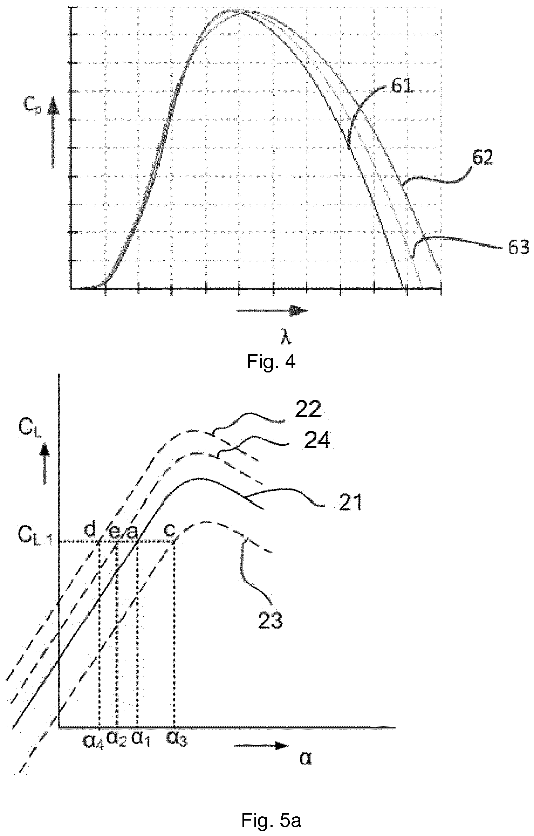

Figure 4 illustrates different $C_p$ - $\lambda$ curves for a positive, negative and neutral actuation of the flaps.

Curve 63 schematically represents the aerodynamic behaviour of the rotor with blades without flaps (or other aerodynamic actuators), or what is the same, the aerodynamic behaviour with blades wherein the aerodynamic actuators are in a neutral position. In this neutral position, they do not significantly affect the aerodynamic behaviour of the blades.

In the "optimum" $C_p$ range (second operational range), the rotational speed is varied to keep a constant $\lambda$ (tip speed ratio), so that maximum $C_p$ is obtained (i.e. substantially at the tip of the curve 63). This way, the energy captured may be maximized. This thus corresponds to the prior art power curve described in the introduction.

The blade's aerodynamic shape may be optimized for this optimum $\lambda$ conditions, but when the $\lambda$ changes $C_p$ values decrease. Once the rotational speed reaches its nominal value (at the beginning of the third operational range) a sharp decrease of the $C_p$ parameter may be observed at increasing wind speeds (displacement of the operation point towards the lower $\lambda$ in the curve 63). A somewhat analogue performance may be observed for the first operational range with an increasing $\lambda$ for the same minimum rotor rotational speed and a decreasing wind speed.

By actuating the flaps, the curve 63 may be modified, thus higher $C_p$ values may be obtained when the operation is not under optimum $\lambda$ conditions. The curve 62 represents the $C_p$ - $\lambda$ performance when the flap is actuated so as to reduce the lift of the blade. The curve 62 illustrates that even though the absolute maximum value of $C_p$ in the curve may be lower than the maximum of curve 63, for a range of tip speed ratios it gives better aerodynamic performance. Since the maximum $C_p$ is lower, it would not be beneficial to use the flaps (or alternative aerodynamic actuators) in the range wherein the tip speed ratio is constant, but as curve 62 illustrates, utilizing the flaps can be useful outside this range.

The curve 61 represents the $C_p$ - $\lambda$ performance when the flap is actuated such as to increase the lift of the blade. This curve also shows that for a range of tip speed ratios, a better aerodynamic performance of a blade (or rotor) may be obtained by actuating the flap.

Following the example, when the flaps are situated in a negative position (in which the flap has a negative contribution to the lift) at the first operational range (higher tip speed ratios) the value of $C_p$ may be increased, thus the energy captured may be increased at this first operational range.

In some examples, the operation of the wind turbine may otherwise be "standard" in the first operational range, i.e. no pitching and a rotational speed of the rotor is controlled to be constant. In other examples, the pitch angles may be changed in addition to using the flaps. Examples will be described later on.

In the same way, when the flaps are situated in a positive position (in which the flap has a positive contribution to the lift) at the third operational range (lower tip speed ratios) the value of $C_p$ may again be increased, thus the energy captured may be increased at this third operational range.

In some examples, the operation of the wind turbine may otherwise again be "standard" in the third operational range, i.e. no pitching and a rotational speed of the rotor is controlled to be constant at the nominal rotor speed. In other examples, the pitch angles may be changed in addition to using the flaps. Examples will be described later on.

This way, the values of the parameter $C_p$ when the operation of the wind turbine in steady state conditions is not under optimum $\lambda$ conditions (second operational range) may be improved, thus higher energy may be obtained with respect to the original condition when flaps are not actuated.

In the aforementioned example, reference was generally only made to flaps. It should be clear that other aerodynamic actuators may give similar or comparable curves. For example, CDTE sections could be used and could give very similar curves as curves 61 and 62. Alternatively, slats could be used or spoilers, or Boundary Layer Control devices, such as synthetic jets. Each of these actuators has a different effect on the $C_p$ - $\lambda$ curves. Not all actuators are necessarily useful in both the first and third range.

Figures 5a - 5b illustrate various methods of operation in accordance with the present invention. In figure 5a, the previously shown lift curves 21, 22, and 23 of a typical airfoil are shown. Figure 5a serves to illustrate that the same lift coefficient of an airfoil may be obtained by different combinations of angle of attack and flap angle.

At point "a", a flap is in its neutral position. The resulting airfoil would thus be the same as an airfoil without any flap. For an angle of attack, $\alpha_1$ a lift coefficient CL1 can be reached. However, the same lift coefficient may be reached with a negative flap angle (i.e. curve 23), but a higher angle of attack $\alpha_3$ For a given wind speed and given rotational speed of the rotor, this means that the blades would need to be pitched negatively.

Again, the same lift coefficient may also be reached at points "d" and "e", for respectively a larger and smaller flap angle in combination with respectively a higher or smaller pitch angle. This thus means that particularly in the first and third operational ranges, different combinations of pitch angle and flap angle could be chosen to give approximately the same results. This would also apply to the second operational range, but as mentioned before, it is generally not desirable to modify the blade shape using e.g. flaps in the second operational range, since the blade's shape is generally optimized precisely for this range of wind speeds.

Even though the curves only relate to an airfoil, i.e. a single blade cross-section, similar curves roughly apply to a blade. The same lift (and roughly the same aerodynamic torque) may be obtained for different combinations of flap angle and pitch angle.

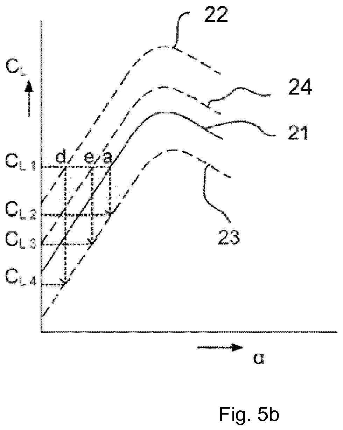

Figure 5b illustrates ranges of control over lift when e.g. a wind gust occurs.

At point "a", if a wind gust occurs, it may be necessary to reduce the lift in order to reduce a high load. To achieve this, the flaps may be moved quickly towards their most negative position so as to reduce the lift ($C_{L2}$) (and thus the loads). When the wind gust and accompanying high load have passed, the flaps may be returned towards their neutral position to regain the lift of the blade ($C_{L1}$) and the aerodynamic torque of the rotor.

Similarly, at point "e", when a high load occurs, the flaps may be moved quickly towards their most negative position so as to reduce the lift coefficient to $C_{L3}$ (and thus the loads). When the high load has passed, the flaps may be returned towards their original position to regain the lift of the blade ($C_{L1}$) and the aerodynamic torque of the rotor. At point "e", the control range of the flaps may thus be improved with respect to the point "a" while the lift is maintained substantially constant in steady state conditions ($C_{L1}$).

Again, similarly, at point "d", when a high load occurs, the flaps may be moved quickly towards their most negative position so as to reduce the lift coefficient to $C_{L4}$ (and thus the loads). When the high load has passed, the flaps may be returned towards their most positive position to regain the lift of the blade ($C_{L1}$) and the aerodynamic torque of the rotor. At this point, the control range of the flaps may thus be improved with respect to the point "e" while the lift is maintained substantially constant in steady state conditions ($C_{L1}$). At point "d", the angle of attack is however smaller than at point "e".

In a third range of operation, in accordance with what has been explained before, a flap may be put in a positive position, e.g. point "e" of figure 5b in order to increase Cp. However, roughly the same improvement in Cp may be reached with the flap in a more positive position, but with the blades with an increased pitch angle (point "d"). With this arrangement, the flaps are located at their most positive position with respect to the points commented above but the lift, in steady state conditions, may be maintained substantially constant $C_{L1}$ and a wider range of control may be available for the flaps in case a high load occurs. It may thus be advantageous to combine a positive pitch angle with an "extra" positive flap angle in order to be better position to counteract high loads related to a wind gust.

Again in the example of figure 5, reference was exclusively made to flaps.

However, other aerodynamic actuators could also be used.

Although only a number of examples have been disclosed herein, other alternatives, modifications, uses and/or equivalents thereof are possible. Furthermore, all possible combinations of the described examples are also covered. Thus, the scope of the present disclosure should not be limited by particular examples, but should be determined only by a fair reading of the claims that follow.

## Claims

1. Method of operating a wind turbine in steady state conditions as a function of a wind speed, the wind turbine having a rotor with a plurality of blades, and one or more pitch mechanisms for rotating the blades around their rotational axes, a generator, and a system for varying a torque of the generator, and wherein

   each of the blades comprises one or more local aerodynamic actuators and
   the method comprising a sub-nominal zone of operation for wind speeds below a nominal wind speed and a supra-nominal zone of operation for wind speeds at or above the nominal wind speed, and wherein
   the sub-nominal zone of operation comprises a first operational range which extends from a cut-in wind speed to a first wind speed, a second operational range extending from the first wind speed to a second wind speed, and a third operational range extending from the second wind speed to the nominal wind speed, wherein
   in the second operational range, the system for varying the torque of the generator is controlled to maintain a tip speed ratio of the rotor constant and the local aerodynamic actuators are not activated,

   **characterized in that** in the third operational range, the local aerodynamic actuators are used to increase the lift of the blade, and/or wherein in the first operational range, the local aerodynamic actuators are used to decrease the lift of the blade.

2. Method according to claim 1, furthermore comprising in transient conditions actuating the local aerodynamic actuators to at least partially compensate the transient conditions.

3. Method according to claim 1 or 2, wherein in the sub-nominal zone of operation, the pitch mechanisms are not used.

4. Method according to claim 1 or 2, wherein in the second operational range, the pitch mechanisms are not used, and in the first and/or third operational range, the pitch mechanisms are used.

5. Method according to claim 4, wherein in the third operational range, the blades are rotated to a positive pitch position such as to reduce the lift of the blade.

6. Method according to any of claims 1 - 5, wherein the one or more local aerodynamic actuators include one or more movable trailing edge surfaces.

7. Method according to claim 6, wherein the movable trailing edge surfaces include flaps.

8. Method according to any of claims 1 - 7, wherein the one or more local aerodynamic actuators are arranged in an outer third of the blades.

9. Method according to any of claims 1 - 8, wherein each of the local aerodynamic actuators can be controlled individually.

10. Method according to any of claims 1 - 9, wherein the one or more local aerodynamic actuators include one or more movable leading edge surfaces.

11. A wind turbine comprising a rotor with a plurality of blades, a generator, a system for varying a torque of the generator, one or more pitch mechanism for rotating the blades around their longitudinal axes, and one or more local aerodynamic actuators, and a wind turbine controller adapted to carry out a method according to any of claims 1 - 10.

12. A wind turbine according to claim 11, wherein the local aerodynamic actuators are configured to change a curvature of a profile of a section of the blade.

13. A wind turbine according to any of claims 11-12, wherein the local aerodynamic actuators include one or more movable trailing edge surfaces.

14. A wind turbine according to claim 13, wherein the movable trailing edge surfaces include flaps.

15. A wind turbine according to any of claims 13 - 14, wherein the local aerodynamic actuators are arranged in an outer third of the blades.

## Patentansprüche

1. Verfahren zum Betrieb von einer Windturbine im stationären Zustand in Abhängigkeit von einer Windgeschwindigkeit, wobei die Windturbine einen Rotor mit einer Vielzahl von Blättern und eine oder mehrere Blattverstellvorrichtungen zur Drehung der Blätter um deren Drehachsen herum, einen Generator und ein System zur Änderung eines Drehmoments des Generators umfasst, und wobei

   jedes Blatt einen oder mehrere örtliche aerodynamische Aktoren umfasst und
   wobei das Verfahren ein subnominales Betriebsfeld für Windgeschwindigkeiten unterhalb einer Nennwindgeschwindigkeit und ein supranominales Betriebsfeld für Windgeschwindigkeiten entsprechend oder oberhalb der Nennwindgeschwindigkeit umfasst, und wobei das subnominale Betriebsfeld einen ersten Betriebsbereich umfasst, der von einer Einschaltwindgeschwindigkeit bis zu einer ersten Windgeschwindigkeit reicht, einen zweiten Betriebsbereich umfasst, der von der ersten Windgeschwindigkeit bis zu einer zweiten Windgeschwindigkeit reicht, und einen dritten Betriebsbereich umfasst, der von der zweiten Windgeschwindigkeit bis zu der Nennwindgeschwindigkeit reicht, wobei im zweiten Betriebsbereich das System zur Änderung des Drehmoments des Generators gesteuert wird, um eine Schnelllaufzahl des Rotors konstant zu halten und die örtlichen aerodynamischen Aktoren nicht betätigt werden, **dadurch gekennzeichnet, dass** im dritten Betriebsbereich die örtlichen aerodynamischen Aktoren eingesetzt werden, um den Auftrieb des Blattes zu erhöhen, und/oder wobei die örtlichen aerodynamischen Aktoren im ersten Betriebsbereich eingesetzt werden, um den Auftrieb des Blattes zu senken.

2. Verfahren nach Anspruch 1, weiterhin umfassend in Übergangszuständen das Betätigen der örtlichen aerodynamischen Aktoren zum mindestens teilweisen Ausgleich der Übergangszustände.

3. Verfahren nach Anspruch 1 oder 2, wobei die Blattverstellvorrichtungen im subnominalen Betriebsfeld nicht eingesetzt werden.

4. Verfahren nach Anspruch 1 oder 2, wobei die Blattverstellvorrichtungen im zweiten Betriebsbereich nicht eingesetzt werden, und die Blattverstellvorrichtungen im ersten und/oder dritten Betriebsbereich eingesetzt werden.

5. Verfahren nach Anspruch 4, wobei die Blätter im dritten Betriebsbereich in eine positive Blattverstellposition gedreht werden, um den Auftrieb des Blattes zu senken.

6. Verfahren nach einem der Ansprüche 1 - 5, wobei der eine oder die mehreren örtlichen aerodynamischen Aktoren eine oder mehrere bewegliche Hinterkantenoberflächen umfassen.

7. Verfahren nach Anspruch 6, wobei die beweglichen Hinterkantenoberflächen Klappen umfassen.

8. Verfahren nach einem der Ansprüche 1 - 7, wobei der eine oder die mehreren örtlichen aerodynamischen Aktoren in einem äußeren Drittel der Blätter angeordnet sind.

9. Verfahren nach einem der Ansprüche 1 - 8, wobei jeder örtliche aerodynamische Aktor individuell gesteuert werden kann.

10. Verfahren nach einem der Ansprüche 1 - 9, wobei der eine oder die mehreren örtlichen aerodynamischen Aktoren eine oder mehrere bewegliche Vorderkantenoberflächen umfassen.

11. Eine Windturbine umfassend einen Rotor mit einer Vielzahl von Blättern, einen Generator, ein System zur Änderung von einem Drehmoment des Generators, eine oder mehrere Blattverstellvorrichtungen zur Drehung der Blätter um deren Längsachsen herum, und einen oder mehrere örtliche aerodynamische Aktoren und eine Steuereinheit der Windturbine, die angepasst ist, um ein Verfahren nach einem der Ansprüche 1 - 10 durchzuführen.

12. Eine Windturbine nach Anspruch 11, wobei die örtlichen aerodynamischen Aktoren konfiguriert sind, um eine Krümmung von einem Profil eines Blattabschnittes zu ändern.

13. Eine Windturbine nach einem der Ansprüche 11-12, wobei die örtlichen aerodynamischen Aktoren eine oder mehrere bewegliche Hinterkantenoberflächen umfassen.

14. Eine Windturbine nach Anspruch 13, wobei die beweglichen Hinterkantenoberflächen Klappen umfassen.

15. Eine Windturbine nach einem der Ansprüche 13 - 14, wobei die örtlichen aerodynamischen Aktoren in einem äußeren Drittel der Blätter angeordnet sind.

**Revendications**

1. Procédé de fonctionnement d'une éolienne à l'état stationnaire en fonction d'une vitesse du vent, l'éolienne ayant un rotor avec une pluralité de pales, et un ou plusieurs mécanismes de commande de pas de pale pour faire pivoter les pales autour de leurs axes longitudinaux, un générateur, et un système pour faire varier un moment du générateur, et dans lequel

    chacune des pales comprend un ou plusieurs actionneurs aérodynamiques
    et
    le procédé comprenant une région subnominale de fonctionnement pour des vitesses du vent au-dessous d'une vitesse nominale du vent et une région supranominale de fonctionnement pour des vitesses du vent correspondantes à ou au-dessus de la vitesse nominale du vent, et dans lequel

la région sous-nominale de fonctionnement comprend une première plage de fonctionnement qui va d'une vitesse de démarrage à une première vitesse du vent, une deuxième plage de fonctionnement qui va de la première vitesse du vent à une deuxième vitesse du vent, et une troisième plage de fonctionnement qui va de la deuxième vitesse du vent à la vitesse nominale du vent, dans lequel

dans la deuxième plage de fonctionnement, le système pour faire varier le moment du générateur est contrôlé pour maintenir une vitesse spécifique du rotor constant et les actionneurs aérodynamiques locaux ne sont pas actionnés, **caractérisé en ce que**

dans la troisième plage de fonctionnement, les actionneurs aérodynamiques locaux sont utilisés pour augmenter la portance de la pale, et/ou dans lequel dans la première plage de fonctionnement, les actionneurs aérodynamiques locaux sont utilisés pour diminuer la portance de la pale.

2. Procédé selon la revendication 1, comprenant en outre dans des conditions transitoires actionner les actionneurs aérodynamiques locaux pour compenser au moins en partie les conditions transitoires.

3. Procédé selon la revendication 1 ou 2, dans lequel dans la région sous-nominale de fonctionnement, les mécanisme de commande de pas de pale ne sont pas utilisés.

4. Procédé selon la revendication 1 ou 2, dans lequel dans la deuxième plage de fonctionnement, les mécanismes de commande de pas de pale ne sont pas utilisés, et dans la première et/ou la troisième plage de fonctionnement, les mécanismes de commande de pas de pale sont utilisés.

5. Procédé selon la revendication 4, dans lequel dans la troisième plage de fonctionnement, les pales sont pivotées jusqu'à une position de pas de pale positif de façon à réduire la portance de la pale.

6. Procédé selon l'une quelconque des revendications 1 - 5, dans lequel l'un ou les plusieurs actionneurs aérodynamiques locaux incluent une ou plusieurs surfaces de bord de fuite mobiles.

7. Procédé selon la revendication 6, dans lequel les surfaces de bord de fuite mobiles incluent des volets.

8. Procédé selon l'une quelconque des revendications 1 - 7, dans lequel l'un ou les plusieurs actionneurs aérodynamiques locaux sont disposés dans un tiers extérieur des pales.

9. Procédé selon l'une quelconque des revendications 1 - 8, dans lequel chacun des actionneurs aérodynamiques locaux peut être contrôlé de façon individuelle.

10. Procédé selon l'une quelconque des revendications 1 - 9, dans lequel l'un ou les plusieurs actionneurs aérodynamiques locaux incluent une ou plusieurs surfaces de bord d'attaque mobiles.

11. Une éolienne comprenant un rotor avec une pluralité de pales, un générateur, un système pour faire varier un moment du générateur, un ou plusieurs mécanismes de commande de pas de pale pour faire pivoter les pales autour de leurs axes longitudinaux, et un ou plusieurs actionneurs aérodynamiques locaux, et une éolienne contrôlée adaptée pour effectuer un procédé selon l'une quelconque des revendications 1 - 10.

12. Une éolienne selon la revendication 11, dans laquelle les actionneurs aérodynamiques locaux sont configurés pour faire varier une courbature d'un profil d'une section de la pale.

13. Une éolienne selon l'une quelconque des revendications 11- -12, dans laquelle les actionneurs aérodynamiques locaux incluent une ou plusieurs surfaces de bord de fuite mobiles.

14. Une éolienne selon la revendication 13, dans laquelle les surfaces de bord de fuite mobiles incluent des volets.

15. Une éolienne selon l'une quelconque des revendications 13 - 14, dans laquelle les actionneurs aérodynamiques locaux sont disposés dans un tiers extérieur des pales.

PRIOR ART

I  II III  IV

β (°)

ω_rotor (rpm)

P (KW)

M (KNm)

V(m/s)

Fig. 1

Fig. 2

Fig. 3a

Fig. 3b

Fig. 3c

Fig. 3d

Fig. 4

Fig. 5a

Fig. 5b

**EP 3 020 959 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2799711 A1